# EUROPÄISCHE PATENTSCHRIFT

(11) **EP 4 249 159 B1**
(45) Veröffentlichungstag und Bekanntmachung des Hinweises auf die Patenterteilung: **18.02.2026**
(21) Anmeldenummer: 23159322.9
(22) Anmeldetag: 01.03.2023
(51) Int. Cl.: B23K 20/10

(54) **BÖRDELSONOTRODE**
CRIMPING SONOTRODE
SONOTRODE À BORDER

(30) Priorität: 21.03.2022 DE 102022106570
(43) Veröffentlichungstag der Anmeldung: 27.09.2023
(73) Patentinhaber: Herrmann Ultraschalltechnik GmbH & Co. KG, 76307 Karlsbad (DE)
(72) Erfinder: Buchty, Valentin, 76275 Ettlingen (DE)
(74) Vertreter: WSL Patentanwälte Partnerschaft mbB

(56) Entgegenhaltungen:
- DE-A1- 2 159 930
- US-A- 3 972 758
- US-A- 5 221 028

## Beschreibung

Die vorliegende Erfindung betrifft eine Sonotrode für das Bördeln einer Kante eines Behälters.

Bei vielen Behältern ist es üblich, eine Kante zu bördeln. Beim Bördeln wird die Kante umgebogen. Häufig ist der Biegewinkel dabei deutlich größer als 90°.

Aus der EP 0 002 833 ist ein Verfahren zum Herstellen eines Bördelrandes bekannt. Die entsprechenden Bördelwerkzeuge führen zu einer Stauchbelastung des Bördelbereiches der Kante, was nicht selten zu einer Beschädigung der Kante oder zu einem undefinierten Knicken des Materials führt. Die DE 21 59 930 A1, welche die Grundlage für den Oberbegriff der unabhängigen Ansprüche bildet, die US 3 972 758 A sowie die US 5 221 028 A zeigen ebenfalls entsprechende Werkzeuge, die jedoch kein sauberes und zuverlässiges Umbiegen der Kante ermöglichen.

Es ist daher Aufgabe der vorliegenden Erfindung, eine Vorrichtung zum Bördeln einer Kante eines Behälters anzugeben, mit der bzw. dem ein zuverlässiges Umbiegen der Kante möglich ist.

Diese Aufgabe wird durch eine Sonotrode nach Anspruch 1 oder Anspruch 3 gelöst.

Erfindungsgemäß erfolgt das Bördeln einer Kante eines Behälters mithilfe einer Sonotrode, die mit einer Ultraschallschwingung angeregt ist und die eine Stirnfläche aufweist, die dafür vorgesehen ist, während einer Relativbewegung entlang einer Längsachse der Sonotrode mit der Kante des Behälters in Kontakt zu treten, wobei die Stirnfläche einen Bördelabschnitt aufweist, welcher zumindest abschnittsweise mit der Längsachse einen Winkel einschließt, der größer als 0° und kleiner als 90° ist und dafür vorgesehen ist, mit der zu bördelnden Kante in Kontakt zu treten.

Erfindungsgemäß ist somit der Bördelabschnitt dafür vorgesehen, die Kante, die während der Bearbeitung in Längsrichtung entlang der Längsachse bewegt wird, nach außen oder innen umzubiegen. Es hat sich gezeigt, dass dieses Umbiegen aufgrund der Ultraschallschwingung überraschend einfach und ohne Beschädigung der Kante erfolgen kann. Zudem kommt es nicht zu Knicken der Kante an unerwünschten Stellen.

In einer bevorzugten Ausführungsform ist vorgesehen, dass der Bördelabschnitt einen konkav gekrümmten Abschnitt aufweist, welcher dafür vorgesehen ist, mit der zu bördelnden Kontaktkante in Kontakt zu treten.

Durch den konkav gekrümmten Abschnitt kann, während die Kante entlang des Bördelabschnittes bewegt wird, die Kante kontinuierlich weiter nach außen oder nach innen gebogen werden. Erfindungsgemäß ist vorgesehen, dass die Stirnfläche eine Rille aufweist, in welcher der Bördelabschnitt angeordnet ist. Die Rille kann zwei gegenüberliegende Rillenwände und einen die Rillen verbindenden Rillengrund haben, die derart ausgebildet sind, dass die Kante des Behälters zunächst entlang der einen Rillenwand geführt und dabei nach außen oder innen umgebogen wird, dann über den Rillengrund, der vorzugsweise konkav gekrümmt ist, geführt wird, um die Kante noch weiter nach außen oder innen umzubiegen und schließlich entlang der zweiten Rillenwand geführt wird, sodass die Kante um deutlich mehr als 90°, vorzugsweise um mehr als 135° umgebogen wird.

Erfindungsgemäß ist vorgesehen, dass die Stirnfläche einen inneren Stirnflächenabschnitt und einen äußeren Stirnflächenabschnitt aufweist, wobei der innere Stirnflächenabschnitt durch die Rille von dem äußeren Stirnflächenabschnitt getrennt ist. Mit anderen Worten ist die Rille in sich geschlossen und ihre Form entspricht im Wesentlichen den Abmessungen der Behälterkante. So kann die Rille in einer Ansicht entlang der Längsachse beispielsweise kreisförmig, quadratisch, rechteckig aber auch nierenförmig ausgebildet sein.

Besonders bevorzugt ist eine Ausführungsform, bei der in einer Axialrichtung, die senkrecht zur Stirnfläche verläuft, entweder der innere Stirnflächenabschnitt über den äußeren Stirnflächenabschnitt vorsteht oder der äußere Stimflächenabschnitt über den inneren Stirnflächenabschnitt vorsteht.

Erfindungsgemäß ist vorgesehen, dass die Rille eine an den inneren Stirnflächenabschnitt anschließende Wand, eine an den äußeren Stirnflächenabschnitt anschließende Wand und einen die beiden Wände der Rille verbindenden Rillengrund aufweist, wobei eine Wand der Rille einen Wulst aufweist, der vorzugsweise entlang der gesamten Rille verläuft. Es hat sich gezeigt, dass durch den Wulst die Materialführung während des Bördelns deutlich verbessert werden kann.

In einer weiteren bevorzugten Ausführungsform ist die sich an den äußeren Stirnflächenabschnitt anschließende Wand gegenüber der Längsachse geneigt.

Es kann alternativ auch von Vorteil sein, wenn die sich an denjenigen Stirnflächenabschnitt, der gegenüber dem anderen Stirnflächenabschnitt in Längsrichtung zurückgesetzt ist, anschließende Wand gegenüber der Längsachse geneigt ist.

Erfindungsgemäß weist die Rille eine Mehrzahl von Ausnehmungen und/oder Vorsprüngen auf, wobei vorzugsweise mindestens 20 Ausnehmungen und/oder Vorsprünge vorgesehen sind.

Die Anordnung der Ausnehmungen und Vorsprüngen verbessert das Biegeverhalten der Kante während des Bördelns.

Dabei sind die Ausnehmungen und/oder Vorsprünge am besten gleich ausgebildet und haben in Richtung der Rille eine Ausdehnung a, wobei benachbarte Ausnehmungen und/oder Vorsprünge in Richtung der Rille mit einem Abstand b voneinander beabstandet sind. In einer bevorzugten Ausführungsform entspricht der Abstand b etwa der Ausdehnung a der Ausnehmungen und/oder Vorsprünge in Richtung der Rille. Insbesondere gilt vorzugsweise 0,9 x a < b < 1,1 x a.

In einer weiteren bevorzugten Ausführungsform ist vorgesehen, dass die Rille in einer Querschnittsansicht senkrecht zur Stirnfläche einen konkav gekrümmten Rillengrund aufweist, wobei vorzugsweise der konkav gekrümmte Abschnitt einen teilkreisförmigen Querschnitt aufweist, wobei besonders bevorzugt der teilkreisförmige Querschnitt einen Krümmungsradius zwischen 1 und 1,5 mm aufweist. In einer weiteren bevorzugten Ausführungsform wird der Krümmungsradius so gewählt, dass er mindestens dreimal so groß ist wie die Dicke des zu bördelnden Materialrandes.

Die vorliegende Erfindung betrifft auch eine Ultraschallschweißvorrichtung zum Bördeln und Schweißen einer Kante eines Behälters mit einer Sonotrode der beschriebenen Art und einem Gegenwerkzeug. Wie bereits beschrieben, ist die Sonotrode dafür vorgesehen, während des Bördelvorgangs in Richtung der Längsachse bewegt zu werden. Das Gegenwerkzeug ist derart angeordnet, dass die umgebördelte Kante während des Schweißvorganges mit Sonotrode und Gegenwerkzeug in Kontakt tritt.

In einer bevorzugten Ausführungsform der Ultraschallschweißvorrichtung wird eine Sonotrode verwendet, bei der in einer Axialrichtung, die senkrecht zur Stirnfläche verläuft, entweder der innere Stirnflächenabschnitt über den äußeren Stirnflächenabschnitt vorsteht oder der äußere Stirnflächenabschnitt über den inneren Stimflächenabschnitt vorsteht. Dabei ist die Sonotrode dafür vorgesehen, zwischen zwei Positionen, nämlich einer Ausgangsposition und einer Schweißposition, hin und her bewegt zu werden, wobei das Gegenwerkzeug eine Siegelfläche aufweist, die in der Schweißposition gegenüberliegend der Rillenwand, die sich an den Stirnflächenabschnitt, der gegenüber dem anderen Stirnflächenabschnitt hervorsteht, anschließt, angeordnet ist, so dass in der Schweißposition, wenn der innere Stirnflächenabschnitt gegenüber dem äußeren Stirnflächenabschnitt vorsteht, der innere Stirnflächenabschnitt zumindest teilweise innerhalb eines Hohlraums des Gegenwerkzeugs angeordnet ist, und, wenn der äußere Stirnflächenabschnitt gegenüber dem inneren Stirnflächenabschnitt vorsteht, das Gegenwerkzeug zumindest teilweise innerhalb eines Hohlraumes der Sonotrode angeordnet ist. Mit anderen Worten ist die Siegelfläche des Gegenwerkzeugs in der Schweißposition in einer Richtung senkrecht zur Längsachse von der Wand der Rille, die sich an den Stirnflächenabschnitt anschließt, der gegenüber dem anderen Stirnflächenabschnitt in Richtung Längsachse vorsteht, beabstandet.

In einer bevorzugten Ausführungsform verbleibt in der Schweißposition zwischen der Siegelfläche des Gegenwerkzeuges und der Rillenwand, die sich an den Stirnflächenabschnitt, der gegenüber dem anderen Stirnflächenabschnitt hervorsteht, anschließt, ein Spalt, wobei vorzugsweise der Spalt in einer Querschnittsansicht parallel zur Längsrichtung konisch ist. Dies hat den Vorteil, dass bei der Relativbewegung zwischen Sonotrode und Gegenwerkzeug der umgebördelte Abschnitt in den Spalt gedrückt wird.

Beschrieben wird auch ein Verfahren zum Bördeln einer Kante eines Behälters, bei der eine Ultraschallschweißvorrichtung wie eingangs beschrieben verwendet wird, wobei die Sonotrode in der Längsrichtung auf das Gegenwerkzeug zu zwischen einer Ausgangsposition über eine Bördelposition in eine Schweißposition bewegt wird, wobei der Behälter derart angeordnet wird, dass die Kante in der Ausgangsposition die Sonotrode nicht berührt, in einer Bördelposition mit dem Bördelabschnitt der Sonotrode in Kontakt tritt und in der Schweißposition die gebördelte Kante zwischen Siegelfläche des Gegenwerkzeuges und einer Siegelfläche der Sonotrode angeordnet ist.

In einer bevorzugten Ausführungsform des Verfahrens weist der Behälter ein Mantelelement und ein von dem Mantelelement umschlossenes Deckelelement auf, wobei das Mantelelement die Kante des Behälters bildet.

So ist es beispielsweise möglich, in einem ersten Schritt das Deckelelement mit der Innenfläche eines durch das Mantelelement gebildeten Hohlzylinders zu befestigen und dann die überstehende Kante des Mantelelementes wie beschrieben umzubördeln.

Weitere Vorteile, Merkmale und Anwendungsmöglichkeiten der vorliegenden Erfindung werden deutlich anhand der folgenden Beschreibung einer bevorzugten Ausführungsform und der zugehörigen Figuren. Es zeigen:
- Figur 1: eine schematische Darstellung der Verhältnisse beim erfindungsgemäßen Bördelprozess,
- Figur 2: eine geschnittene Seitenansicht auf eine erste Ausführungsform einer erfindungsgemäßen Sonotrode,
- Figur 3: eine geschnittene Teilausschnittsvergrößerung der Ausführungsform vom Figur 2,
- Figuren 4-8: verschiedene Ansichten einer zweiten Ausführungsform der erfindungsgemäßen Sonotrode.

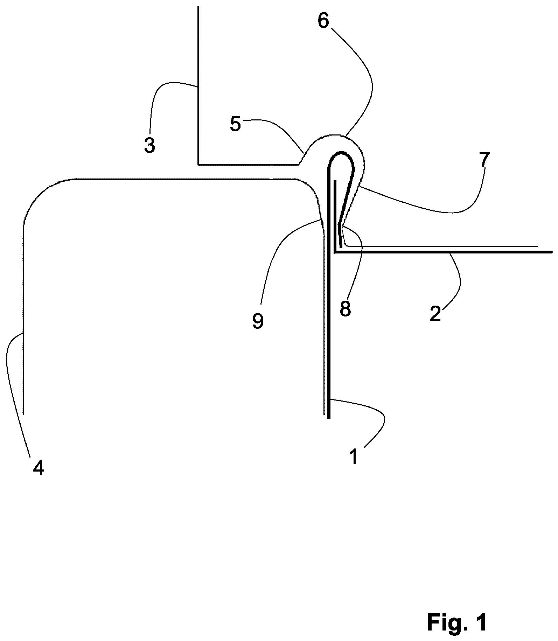

Figur 1 ist eine schematische Darstellung der Verhältnisse während des erfindungsgemäßen Bördelprozesses. Der zu bearbeitenden Behälter weist hier ein Mantelelement 1 auf, welches beispielsweise hohlzylinderförmig sein kann. An der Innenfläche des Mantelelements 1 ist ein Deckelelement 2 mit dem Mantelelement 1 verbunden.

Man erkennt in Figur 1, dass die äußeren Abschnitte des Deckelelementes 2 nach oben gebogen sind, sodass diese parallel zu dem Mantelelement 1 verlaufen.

In einer Ausgangsposition der Sonotrode man die in den Figuren nicht zu sehen ist, ist die Sonotrode 3 in Längsrichtung, d. h. in Figur 1 in vertikaler Richtung, von dem Gegenwerkzeug 4 entfernt. In dieser nicht gezeigten Position ist das Mantelelement 1 noch nicht umgebogen.

Um die obere Kante umzubördeln, sodass sie in etwa in der in Figur 1 gezeigten Position zu liegen kommt, wird eine erfindungsgemäße Sonotrode 3 verwendet, welche in Richtung ihrer Längsachse, d.h. in Figur 1 vertikal, auf die Oberkante des Mantelelementes 1 zubewegt wird. Die Sonotrode 3 weist eine Rille auf mit einer ersten Wand 5, einer zweiten Wand 7 sowie einem Rillengrund 6, der konkav gekrümmt ist, d.h. hier mit einem Krümmungsradius versehen ist.

Bei der Relativbewegung der Sonotrode 3 in Richtung der Kante des Mantelelementes 1, d.h. in vertikaler Richtung, tritt die obere Kante des Mantelelementes 1 zunächst mit der Wand 5 der Sonotrode in Kontakt, die gegenüber der Vertikalrichtung, d.h. gegenüber der Längsachse der Sonotrode 3, mit einem Neigungswinkel geneigt ist, der größer als 0 und kleiner als 90° ist.

Sobald die obere Kante des Mantelelementes 1 mit der geneigten Wand 5 in Kontakt tritt, wird die obere Kante des Mantelelementes 1 nach innen, d.h. in Figur 1 nach rechts, umgebogen.

Sobald die obere Kante dann mit dem Rillengrund 6 in Kontakt tritt, wird das Verbiegen der oberen Kante des Mantelelementes 1 noch verstärkt, bis die Kante des Mantelelementes 1 die andere Wand 7 erreicht und dann in etwa die in der Figur 1 gezeigte Position einnimmt.

In dieser Ausführungsform ist dann in der Wand 7 eine als Wulst ausgebildete Nase 8 vorgesehen, die den umgebördelten Kantenabschnitt nach außen drückt. Der Wulst 8 ist allerdings nicht unbedingt erforderlich.

Weiterhin zu sehen ist ein Amboss 4, welcher eine konische Siegelfläche 9 aufweist, sodass der Abstand zwischen der Wand 7 und der konischen Siegelfläche 9 verringert wird, wenn sich die Sonotrode 3 in Richtung des Amboss' 4, d.h. in Richtung der Längsachse, bewegt. Mit dem Werkzeug wird daher nicht nur die obere Kante des Behälters umgebördelt, sondern auch der umgebördelte Kantenabschnitt mit dem Deckelelement 2 und dem Mantelelement 1 verschweißt, sodass die Bördelung für zusätzlichen Halt des Deckels 2 sorgt.

Die in Figur 1 gezeigte Position ist die Schweißposition. Zwischen der beschriebenen Ausgangsposition und der gezeigten Schweißposition liegt die Bördelposition, während der das Mantelelement mit den Rillenwänden 5,7 und dem Rillengrund 6 nacheinander in Kontakt tritt und umgebogen wird.

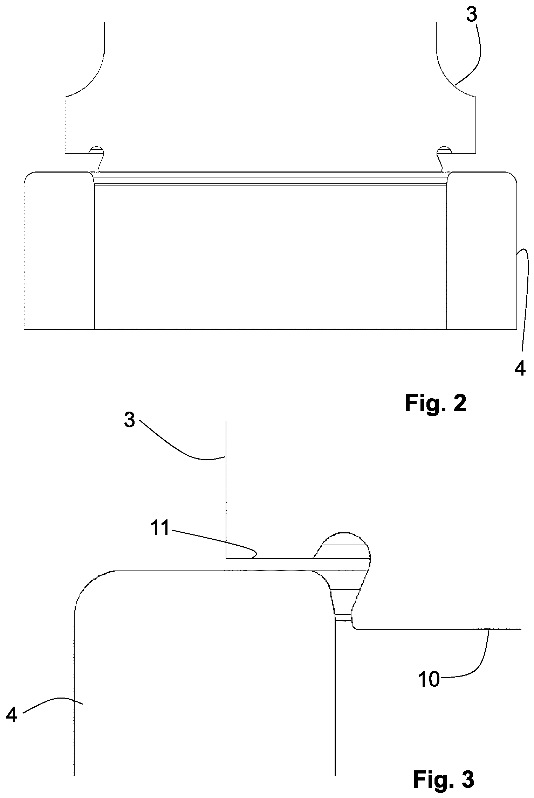

In den Figuren 2 und 3 sind eine Schnittansicht und eine Teilansicht einer ersten Ausführungsform der erfindungsgemäßen Sonotrode nebst zugehörigem Amboss 4 dargestellt. Die Verhältnisse entsprechen im Wesentlichen der in Figur 1 gezeigten Darstellung. Man erkennt, dass die Siegelfläche der Sonotrode einen inneren Stirnflächenabschnitt 10 und einen äußeren Stirnflächenabschnitt 11 aufweist, wobei der innere Stirnflächenabschnitt 10 in Richtung der Längsachse über den äußeren Stirnflächenabschnitt 11 vorsteht. Zwischen innerem Stirnflächenabschnitt 10 und äußerem Stirnflächenabschnitt 11 ist die Rille mit dem Bördelabschnitt geordnet. Der Amboss 4 ist gegenüber dem äußeren Stirnflächenabschnitt 11 angeordnet.

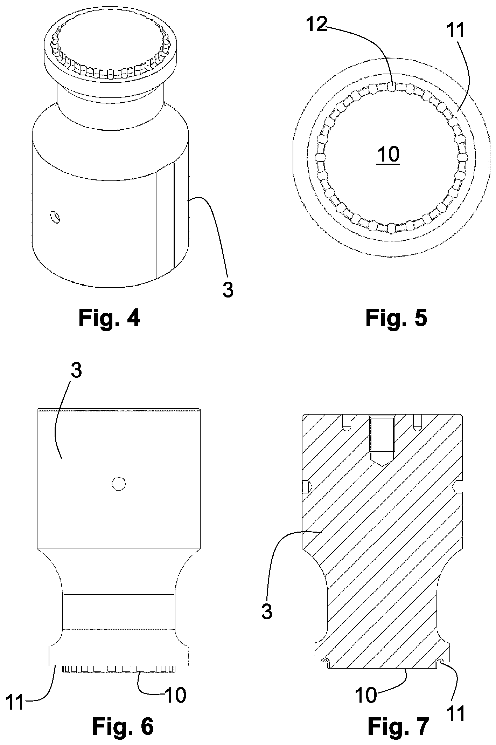

Die Figuren 4-8 zeigen verschiedene Ansichten einer zweiten erfindungsgemäßen Sonotrode.

In Figur 4 ist eine perspektivische Ansicht der Sonotrode dargestellt, wobei hier die Stirnfläche nach oben zeigt. Die Längsachse verläuft in Figur 4 ebenfalls in vertikaler Richtung. Figur 5 zeigt die Draufsicht auf die Stirnfläche, welche einen inneren Stirnflächenabschnitt 10 und einen äußeren Stirnflächenabschnitt 11 aufweist. Zwischen den beiden Stirnflächenabschnitten 10, 11 ist die Rille 12 angeordnet, welche hier eine Reihe von Facetten, d.h. eingearbeitete Vertiefungen, aufweist, wobei die Vertiefungen bei dieser Ausführungsform eine Breite haben, die breiter als die Rillenbreite ist. In Figur 6 ist eine Seitenansicht auf die Sonotrode gezeigt, an der man erkennen kann, dass sich die Facetten bis zur inneren Rillenwand erstrecken, die die Rille mit dem inneren Stirnflächenabschnitt 10 verbindet.

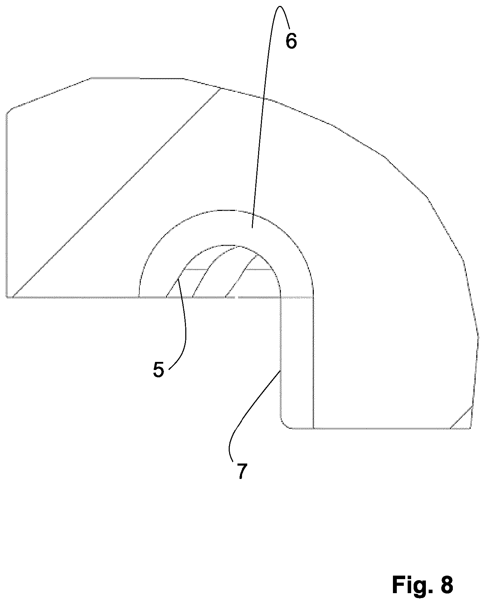

Figur 7 ist eine Schnittansicht der Sonotrode 3. Schließlich ist in Figur 8 eine Teilschnittansicht gezeigt. Man erkennt, dass sich die Rille von der Rille in den Ausführungsformen 2 und 3 im Wesentlichen dadurch unterscheidet, dass die innere Rillenwand 7 hier in Richtung der Längsachse orientiert ist. Auch hier wird das zu bördelnde Material derart angeordnet, dass die Kante des Behälters zunächst auf die Rillenwand 5 trifft, die gegenüber der Waagerechten zwischen 0 und 90° geneigt ist, wodurch die Behälterwand nach innen, d.h. in der Figur 8 nach rechts, umgebogen wird. Die Kante verläuft dann über den konkav gekrümmten Abschnitt 6, der durch den Rillengrund 6 gebildet wird und wird in Richtung der Rillenwand 7 umgebördelt.

Durch die Verwendung von Ultraschall ist es möglich, die beschriebene Bördelung mit wenig Energie und sehr zuverlässig bei äußerst geringen Fehlbördelungen zu verwirklichen.

### Bezugszeichenliste

- 1: Mantelelement
- 2: Deckelelement
- 3: Sonotrode
- 4: Amboss
- 5: Rillenwand
- 6: Rillengrund
- 7: Rillenwand
- 8: Wulst
- 9: Siegelfläche
- 10: innerer Stirnflächenabschnitt
- 11: äußerer Stirnflächenabschnitt
- 12: Rille

## Patentansprüche

1. Sonotrode für das Bördeln einer Kante eines Behälters mit einer Stirnfläche, die dafür vorgesehen ist, während einer Relativbewegung entlang einer Längsachse mit der Kante des Behälters in Kontakt zu treten, wobei die Stirnfläche einen Bördelabschnitt aufweist, welcher zumindest abschnittsweise mit der Längsachse einen Winkel einschließt, der größer als 0° und kleiner als 90° ist und dafür vorgesehen ist, mit der zu bördelnden Kante in Kontakt zu treten, wobei die Stirnfläche eine Rille (12) aufweist, in welcher der Bördelabschnitt angeordnet ist, und die Stirnfläche einen inneren Stirnflächenabschnitt (10) und einen äußeren Stirnflächenabschnitt (11) aufweist, wobei der innere Stirnflächenabschnitt (10) durch die Rille (12) von dem äußeren Stirnflächenabschnitt (11) getrennt ist, **dadurch gekennzeichnet, dass** die Rille (12) eine an den inneren Stirnflächenabschnitt (10) anschließende Wand, eine an den äußeren Stirnflächenabschnitt (12) anschließende Wand und einen die beiden Wände der Rille (12) verbindenden Rillengrund (6) aufweist, wobei eine Wand der Rille (12) einen Wulst (7) aufweist, der vorzugsweise entlang der gesamten Rille (12) verläuft.

2. Sonotrode nach Anspruch 1, **dadurch gekennzeichnet, dass** der Bördelabschnitt einen konkav gekrümmte Abschnitt aufweist, welcher dafür vorgesehen ist, mit der zu bördelnden Kante in Kontakt zu treten.

3. Sonotrode für das Bördeln einer Kante eines Behälters mit einer Stirnfläche, die dafür vorgesehen ist, während einer Relativbewegung entlang einer Längsachse mit der Kante des Behälters in Kontakt zu treten, wobei die Stirnfläche einen Bördelabschnitt aufweist, welcher zumindest abschnittsweise mit der Längsachse einen Winkel einschließt, der größer als 0° und kleiner als 90° ist und dafür vorgesehen ist, mit der zu bördelnden Kante in Kontakt zu treten, wobei die Stirnfläche eine Rille (12) aufweist, in welcher der Bördelabschnitt angeordnet ist, **dadurch gekennzeichnet, dass** die Rille (12) eine Mehrzahl von Ausnehmungen und/oder Vorsprüngen aufweist, wobei vorzugsweise mindestens 20 Ausnehmungen und/oder Vorsprünge vorgesehen sind.

4. Sonotrode nach Anspruch 3, **dadurch gekennzeichnet, dass** die Ausnehmungen und/oder Vorsprünge gleich ausgebildet sind und in Richtung der Rille (12) eine Ausdehnung a haben, wobei benachbarte Ausnehmungen und/oder Vorsprünge in Richtung der Rille (12) mit einem Abstand b voneinander beanstandet sind, wobei vorzugsweise 0,9 a < b <1,1 a ist.

5. Sonotrode nach einem der Ansprüche 3 oder 4, **dadurch gekennzeichnet, dass** die Rille (12) in einer Querschnittsansicht senkrecht zur Stirnfläche einen konkav gekrümmten Rillengrund (6) aufweist, wobei vorzugsweise der konkav gekrümmte Abschnitt einen teilkreisförmigen Querschnitt aufweist, wobei besonders bevorzugt der teilkreisförmige Querschnitt einen Krümmungsradius zwischen 1 und 1,5 mm aufweist.

6. Sonotrode nach einem der Ansprüche 3 bis 5, **dadurch gekennzeichnet, dass** die Stirnfläche einen inneren Stirnflächenabschnitt und einen äußeren Stirnflächenabschnitt aufweist, wobei der innere Stirnflächenabschnitt durch die Rille (12) von dem äußeren Stirnflächenabschnitt getrennt ist.

7. Sonotrode nach einem der Ansprüche 3 bis 6, **dadurch gekennzeichnet, dass** die Rille (12) eine an den inneren Stirnflächenabschnitt anschließende Wand, eine an den äußeren Stirnflächenabschnitt anschließende Wand und einen die beiden Wände der Rille (12) verbindenden Rillengrund (6) aufweist, wobei eine Wand der Rille (12) einen Wulst aufweist, der vorzugsweise entlang der gesamten Rille (12) verläuft.

8. Sonotrode nach einem der vorherigen Ansprüche, **dadurch gekennzeichnet, dass** in einer Axialrichtung, die senkrecht zur Stirnfläche verläuft, entweder der innere Stirnflächenabschnitt über den äußeren Stirnflächenabschnitt vorsteht oder der äußere Stirnflächenabschnitt über den inneren Stirnflächenabschnitt vorsteht.

9. Ultraschallschweißvorrichtung zum Bördeln und Schweißen einer Kante eines Behälters mit einer Sonotrode nach einem der Ansprüche 1 bis 8 und einem Gegenwerkzeug.

10. Ultraschallschweißvorrichtung nach Anspruch 9, wobei die Sonotrode eine Sonotrode nach Anspruch 8 ist, und dafür vorgesehen ist, zwischen zwei Positionen, einer Ausgangsposition und einer Schweißposition hin und her bewegt zu werden, wobei das Gegenwerkzeug eine Siegelfläche aufweist, die in der Schweißposition der Rillenwand, die sich an den Stirnflächenabschnitt, der gegenüber dem anderen Stirnflächenabschnitt hervorsteht, anschließt, gegenüberliegend angeordnet ist, so dass in der Schweißposition, wenn der innere Stirnflächenabschnitt gegenüber dem äußeren Stirnflächenabschnitt vorsteht, der innere Stirnflächenabschnitt zumindest teilweise innerhalb eines Hohlraums des Gegenwerkzeugs angeordnet ist, und, wenn der äußere Stirnflächenabschnitt gegenüber dem inneren Stirnflächenabschnitt vorsteht, das Gegenwerkzeug zumindest teilweise innerhalb eines Hohlraumes der Sonotrode angeordnet ist.

11. Ultraschallschweißvorrichtung nach Anspruch 10, **dadurch gekennzeichnet, dass** in der Schweißposition zwischen der Siegelfläche des Gegenwerkzeuges und der Rillenwand, die sich an den Stirnflächenabschnitt, der gegenüber dem anderen Stirnflächenabschnitt hervorsteht, anschließt, ein Spalt verbleibt, wobei vorzugsweise der Spalt in einer Querschnittsansicht parallel zur Längsrichtung konisch ist.

## Claims

1. A sonotrode for crimping an edge of a container having an end face, which is intended to contact the edge of the container during a relative movement along a longitudinal axis, wherein the end face comprises a crimping portion, at least portions of which form an angle with the longitudinal axis that is greater than 0° and is smaller than 90° and is intended to contact the edge being crimped, wherein the end face comprises a groove (12), in which the crimping portion is arranged, and the end face comprises an inner end face portion (10) and an outer end face portion (11), wherein the inner end face portion (10) is separated from the outer end face portion (11) via the groove (12), **characterized in that** the groove (12) comprises a wall adjoining the inner end face portion (10), a wall adjoining the outer end face portion (12) , and a groove base (6) connecting the two walls of the groove (12), wherein one wall of the groove (12) comprises a bead (7), which preferably extends along the entire groove (12).

2. The sonotrode according to claim 1, **characterized in that** the crimping portion comprises a concavely curved portion, which is intended to contact the edge being crimped.

3. The sonotrode for crimping an edge of a container having an end face, which is intended to contact the edge of the container during a relative movement along a longitudinal axis, wherein the end face comprises a crimping portion, at least portions of which form an angle with the longitudinal axis that is greater than 0° and is smaller than 90° and which is intended to contact a edge to be crimped, wherein the end face comprises a groove (12), within which the crimping portion is arranged, **characterized in that** the groove (12) comprises a plurality of recesses and/or protrusions, wherein preferably at least 20 recesses and/or protrusions are provided.

4. The sonotrode according to claim 3, **characterized in that** the recesses and/or protrusions have the same design and have a length a in the direction of the groove (12), wherein adjacent recesses and/or protrusions are arranged in the direction of the groove (12) at a distance b from one another, wherein 0.9 a < b < 1.1 a is preferable.

5. The sonotrode according to claim 3 or 4, **characterized in that** the groove (12) comprises a concavely curved groove base (6) in a cross-sectional view perpendicular to the end face, wherein the concavely curved portion preferably comprises a part-circular cross-section, wherein the part-circular cross-section particularly preferably has a radius of curvature of between 1 and 1.5 mm.

6. The sonotrode according to one of claims 3-5, **characterized in that** the end face comprises an inner end face portion and an outer end face portion, wherein the inner end face portion is separated from the outer end face portion via the groove (12).

7. The sonotrode according to one of claims 3-6, **characterized in that** the groove (12) comprises a wall adjoining the inner end face portion, a wall adjoining the outer end face portion, and a groove base (6) connecting the two walls of the groove (12), wherein one wall of the groove (12) comprises a bead, which preferably extends along the entire groove (12).

8. The sonotrode according to one of the preceding claims, **characterized in that**, in an axial direction perpendicular to the end face, either the inner end face portion protrudes over the outer end face portion, or the outer end face portion protrudes over the inner end face portion.

9. An ultrasonic welding apparatus for crimping and welding an edge of a container by means of a sonotrode according to one of claims 1 to 8 and a counter-tool.

10. The ultrasonic welding apparatus according to claim 9, wherein the sonotrode is a sonotrode according to claim 8 and is intended to be moved between two positions, an initial position and a welding position, wherein the counter-tool comprises a sealing surface which, when in the welding position of the groove wall adjoining the end face portion, which protrudes opposite the other end face portion, said sealing surface is arranged opposite such that, when in the welding position, when the inner end face portion protrudes opposite the outer end face portion, the inner end face portion is arranged at least partially within a cavity of the counter-tool and, when the outer end face portion protrudes opposite the inner end face portion, the counter-tool is arranged at least partially within a cavity of the sonotrode.

11. The ultrasonic welding apparatus according to claim 10, **characterized in that**, when in the welding position between the sealing surface of the counter-tool and the groove wall, which is adjacent to the end face portion protruding opposite the other end face portion, a gap remains, wherein the gap is preferably conical in a cross-sectional view parallel to the longitudinal direction.

## Revendications

1. Sonotrode pour border un bord d'un contenant, avec une face frontale qui est destinée à entrer en contact avec le bord du contenant lors d'un mouvement relatif le long d'un axe longitudinal, la face frontale comprenant une zone à border qui forme, au moins par sections, un angle avec l'axe longitudinal qui est supérieur à 0° et inférieur à 90°, et est destinée à entrer en contact avec le bord à border, la face frontale comprenant une rainure (12) dans laquelle la zone à border est située et la face frontale comprenant une zone intérieure (10) de face frontale et une zone extérieure (11) de face frontale, la zone intérieure (10) de face frontale étant séparée de la zone extérieure (11) de face frontale par la rainure (12), **caractérisée en ce que** la rainure (12) comprend une paroi adjacente à la zone intérieure (10) de face frontale, une paroi adjacente à la zone extérieure (11) de face frontale et un fond de rainure (6) reliant les deux parois de la rainure (12), une paroi de la rainure (12) comprenant un bourrelet (7) qui s'étend de préférence le long de la rainure (12) entière.

2. Sonotrode selon la revendication 1, **caractérisée en ce que** la zone à border comprend une section courbée concave qui est destinée à entrer en contact avec le bord à border.

3. Sonotrode pour border un bord d'un contenant, avec une face frontale qui est destinée à entrer en contact avec le bord du contenant lors d'un mouvement relatif le long d'un axe longitudinal, la face frontale comprenant une zone à border qui forme, au moins par sections, un angle avec l'axe longitudinal qui est supérieur à 0° et inférieur à 90°, et est destinée à entrer en contact avec le bord à border, la face frontale comprenant une rainure (12) dans laquelle la zone à border est située, **caractérisée en ce que** la rainure (12) comprend une pluralité d'évidements et/ou de saillies, de préférence, au moins 20 évidements et/ou de saillies étant prévus.

4. Sonotrode selon la revendication 3, **caractérisée en ce que** les évidements et/ou les saillies sont formés de façon identique et ont une étendue a en direction de la rainure (12), des évidements et/ou des saillies voisins étant espacés d'une distance b les uns des autres en direction de la rainure (12), et de préférence 0,9 a < b < 1,1 a.

5. Sonotrode selon l'une des revendications 3 ou 4, **caractérisée en ce que** la rainure (12) comprend, en une vue transversale perpendiculaire à la face frontale, un fond de rainure (6) courbé concave, la section courbée concave comprenant de préférence une section transversale de forme de portion de cercle, la section transversale de forme de portion de cercle ayant, de manière particulièrement préférée, un rayon de courbure entre 1 et 1,5 mm.

6. Sonotrode selon l'une des revendications 3 à 5, **caractérisée en ce que** la face frontale comprend une section de face frontale intérieure et une section de face frontale extérieure, la section de face frontale intérieure étant séparée de la section de face frontale extérieure par la rainure (12).

7. Sonotrode selon l'une des revendications 3 à 6, **caractérisée en ce que** la rainure (12) comprend une paroi adjacente à la section de face frontale intérieure, une paroi adjacente à la section de face frontale extérieure et un fond de rainure (6) reliant les deux parois de la rainure (12), une paroi de la rainure (12) comprenant un bourrelet qui s'étend de préférence le long de la rainure (12) entière.

8. Sonotrode selon l'une des revendications précédentes, **caractérisée en ce que**, dans une direction axiale qui est perpendiculaire à la face frontale, ou bien la section de face frontale intérieure dépasse de la section de face frontale extérieure ou bien la section de face frontale extérieure dépasse de la section de face frontale intérieure.

9. Dispositif de soudure à ultrasons pour border et souder un bord d'un contenant avec une sonotrode selon l'une des revendications 1 à 8 et un contre-outil.

10. Dispositif de soudure à ultrasons selon la revendication 9, la sonotrode étant une sonotrode selon la revendication 8 et étant conçue pour être mue dans un mouvement de va-et-vient entre deux positions, une position de départ et une position de soudure, le contre-outil comprenant une surface de soudage qui, dans la position de soudure, est disposée en regard de la paroi de rainure qui est adjacente à la section de face frontale qui dépasse de l'autre section de face frontale, si bien que, dans la position de soudure, lorsque la section de face frontale intérieure dépasse de la section de face frontale extérieure, la section de face frontale intérieure soit disposée, du moins en partie, à l'intérieur d'un creux du contre-outil, et, lorsque la section de face frontale extérieure dépasse de la section de face frontale intérieure, le contre-outil soit disposé, du moins en partie, à l'intérieur d'un creux de la sonotrode.

11. Dispositif de soudure à ultrasons selon la revendication 10, **caractérisé en ce que**, dans la position de soudure, il reste une fente entre la surface de soudage du contre-outil et la paroi de rainure, qui est adjacente à la section de face frontale qui dépasse de l'autre section de face frontale, la fente étant de préférence conique en une vue en coupe transversale parallèlement à la direction longitudinale.
